# EUROPEAN PATENT APPLICATION

(11) **EP 4 404 124 A1**
(43) Date of publication of application: **24.07.2024**
(21) Application number: 23382043.0
(22) Date of filing: 20.01.2023
(51) Int. Cl.: G06Q 20/00

(54) **METHOD AND DEVICE FOR CREATING TRUSTWORTHY AGREEMENTS BETWEEN DIFFERENT NETWORK NODES OF A BLOCKCHAIN NETWORK TO COMPENSATE DIGITAL ASSETS**

(71) Applicant: Byppay Global, SL, 17007 Girona (ES)
(72) Inventor: DE LA ROSA ESTEVA, José Luis, 17007 Girona (ES)
(74) Representative: Torner, Juncosa I Associats, SL

(57) **Abstract**

A computer implemented method and a device for creating trustworthy agreements between different network nodes of a blockchain network to compensate digital assets. The method comprises establishing, by a first node, a smart contract including two non-fungible tokens with wallet, a first non-fungible token comprising a first asset belonging to a second node and a second non-fungible token comprising a second asset belonging to a third node; appraising a quantity of fungible tokens of each one of the two non-fungible tokens; computing the Maximal Common Factor between the appraised quantity of fungible tokens of the two non-fungible tokens, obtaining a new quantity of fungible tokens; transferring the obtained new quantity of fungible tokens to the non-fungible token having a lower appraised quantity of fungible tokens; and swapping the two non-fungible tokens, so that the first non-fungible token is transferred to the third node and the second non-fungible token is transferred to the second node.

## Description

### Technical Field

The present invention is directed to a method for creating trustworthy agreements between different network nodes of a blockchain network to compensate digital assets. The invention also relates to a device to perform such method.

### Background of the Invention

Blockchain is a shared, immutable ledger that facilitates the process of recording transactions and tracking assets in a network. It provides immediate, shared and completely transparent information stored on an immutable ledger that can be accessed only by permissioned network members.

Some of the advantages of Blockchain are:
- Highly Secure, since it uses a digital signature feature to conduct fraud-free transactions making it impossible to corrupt or change the data of an individual by the other users without a specific digital signature.
- Decentralized System, since with Blockchain transactions are done with the mutual consensus of users resulting in smoother, safer, and faster transactions.
- Automation Capability: it is programmable and can generate systematic actions, events, and payments automatically when the criteria of the trigger are met.

Therefore, blockchain is applicable to many application scenarios with high demands for data reliability.

### Description of the Invention

Present invention proposes a new solution, sometimes implemented on a computer device via a software application, that works peer to peer and that fits nicely with decentralized technologies like Blockchain. It consists of two by two nodes compensation agreements acknowledged by third parties that are implementable as smart contracts, and tokens that are used to balance digital assets of the nodes. Agreements follow a bottom up process, and blockchain follows their decentralized logic, so that all proposals and compensations are checked by peers. The said nodes swap the tokens. Agreements can be applied to a series of nodes, swapping assets through a set of nodes.

The invention can include interrogating a blockchain using encrypted input identifiers, generating and storing hashed data therein, sending a trace history based on that data, and using tokens for the digital assets compensation among nodes and implementing the swaps.

The proposed method aims at ensuring confidentiality of participants and data security for compensating digital assets. More concretely, the invention enables helping several nodes coordinate in their compensations of digital assets. The coordination is technically implementable by means of non-fungible tokens (NFT) that handle the compensation agreements as smart contracts with a wallet that contains there inside the said assets. The compensation agreements contained in that NFT are indeed smart contracts that collect the agreements, trace the compensations, and redeem bonuses. As well, and it is key added value and uniqueness of the invention, it is able to extend the trust environment, of trusted data and digital assets, further steps in a supply chain by adding new actors that join the deal and the result is that one node that has an asset might be the beginning of a series of compensations through a chain of actors.

Embodiments of the present invention provide, according to one aspect, a method for creating trustworthy agreements between different network nodes of a blockchain network to compensate digital assets. Particularly, the method comprises establishing, by a first network node of the blockchain network, a compensation service agreement terms as a smart contract, the smart contract including two non-fungible tokens with wallet, a first non-fungible token of the two non-fungible tokens comprising a first digital asset belonging to a second network node of the blockchain network and a second non-fungible token of the two non-fungible tokens comprising a second digital asset belonging to a third network node of the blockchain network; appraising, by the first network node, a quantity of fungible tokens of each one of the two non-fungible tokens; computing, by the first network node, a Maximal Common Factor (MCF) = Min (A, B) (i.e., the intersection of the two appraisals A and B, and which is implemented as the minimum of the two appraisals A and B)) between the appraised quantity of fungible tokens of the two non-fungible tokens, obtaining a new quantity of fungible tokens as a result; transferring, by the first network node, the obtained new quantity of fungible tokens to the non-fungible token having a lower appraised quantity of fungible tokens; and swapping, by the first network node, the two non-fungible tokens, so that the first non-fungible token is transferred to the third network node and the second non-fungible token is transferred to the second network node.

In some embodiments, the two non-fungible tokens are EIP 4944 Ethereum tokens or EIP 4950 Ethereum tokens.

In some embodiments, the smart contract further comprises collateral data for secure the compensation service. In this case, the invention further comprises using a Reverse Kelly formula to calculate how much fungible tokens must be added to enhance the trust in the compensation.

In some embodiments, the collateral data is received by a plurality of the network nodes of the blockchain network different to the second and third network nodes. Alternatively, the collateral data can be received by a plurality of the network nodes of the blockchain network including the second and third network nodes.

Present invention also proposes, according to another aspect, a device comprising a processor, a memory, and a computer-readable medium coupled to the processor, the computer-readable medium comprising code executable by the processor for implementing the proposed method.

In some embodiments, the device comprises a smartphone, a PC, a computer server, or a tablet, among others.

Thus, present invention enables helping several actors/entities coordinate in their compensations with traded digital assets. Such coordination is technically implementable by means of non-fungible tokens (NFT) that handle the agreements as smart contracts with a wallet containing therein the digital assets and the collateral for securing the digital assets. The invention is able to extend the trust environment of trusted data and real and collateralized digital assets. The invention can be implemented as a full blockchain platform with a Webapp that will behave as a multiplatform messaging app for securing digital assets

### Description of the Drawings

The previous and other advantages and features will be more fully understood from the following detailed description of embodiments, with reference to the attached figures, which must be considered in an illustrative and non-limiting manner, in which:
- Fig. 1: is a flow diagram of the proposed method, according to an embodiment.
- Fig. 2: shows another embodiment of the proposed method.

### Detailed Description of Preferred Embodiments

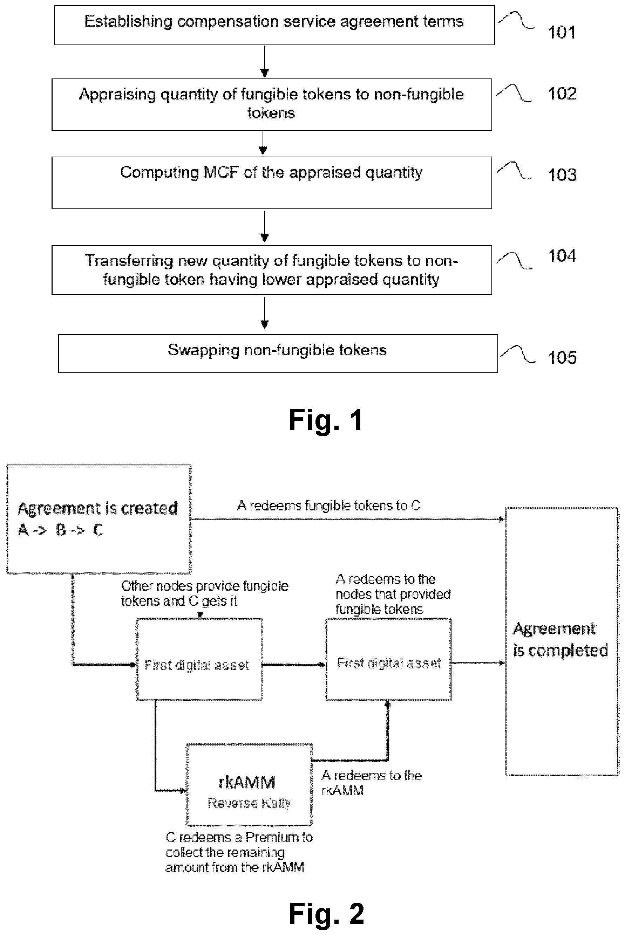

Fig. 1 shows an embodiment of the proposed method for creating trustworthy agreements between different network nodes of a blockchain network to compensate digital assets such as invoices, digital pieces, games, art, etc. According to this embodiment, the method is implemented by a given first network node of the blockchain network. At step 101, a compensation service agreement terms is established as a smart contract. Particularly, such smart contract comprises two non-fungible tokens (e.g. EIP 4944 Ethereum tokens or EIP 4950 Ethereum tokens) with wallet. The first non-fungible token includes a first digital asset belonging to a second network node of the blockchain network and the second non-fungible token includes a second digital asset belonging to a third network node of the blockchain network. At step 102, the first network node appraises/assesses a given number of fungible tokens of each one of the first and second non-fungible tokens and computes, at step 103, the MCF between the appraised/assessed number. Such that a new quantity of fungible tokens is obtained. Then, at step 104, the new quantity obtained is transferred to the non-fungible token having a lower appraised quantity of fungible tokens. Finally, at step 105, the first network node swaps the two non-fungible tokens. Thus, the first non-fungible token is transferred to the third network node and the second non-fungible token is transferred to the second network node.

With regard to the embodiment showed in Fig. 2, once the compensation service agreement is created between the previous three nodes, and if the agreement is open to other 3^{rd} parties, then the smart contract may also include collateral data for secure the compensation service. That is, other nodes of the blockchain network may provide fungible tokens, in this case to the third node (or node C in this example), and the second node (or node A in this example) reems to said other nodes.

Furthermore, a Reverse Kelly formula for an Automated Market Maker (rkAMM) can be used to calculate how much fungible tokens must be added to enhance the trust in the compensation agreement.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A computer implemented method for creating trustworthy agreements between different network nodes of a blockchain network to compensate digital assets, the method comprising:
establishing, by a first network node of the blockchain network, a compensation service agreement terms as a smart contract, the smart contract including two non-fungible tokens with wallet, a first non-fungible token of the two non-fungible tokens comprising a first digital asset belonging to a second network node of the blockchain network and a second non-fungible token of the two non-fungible tokens comprising a second digital asset belonging to a third network node of the blockchain network;
appraising, by the first network node, a quantity of fungible tokens of each one of the two non-fungible tokens;
computing, by the first network node, the Maximal Common Factor between the appraised quantity of fungible tokens of the two non-fungible tokens, obtaining a new quantity of fungible tokens as a result;
transferring, by the first network node, the obtained new quantity of fungible tokens to the non-fungible token having a lower appraised quantity of fungible tokens; and
swapping, by the first network node, the two non-fungible tokens, so that the first non-fungible token is transferred to the third network node and the second non-fungible token is transferred to the second network node.

2. The method of claim 1, wherein the two non-fungible tokens are EIP 4944 Ethereum tokens or EIP 4950 Ethereum tokens.

3. The method of claim 1 or 2, wherein the smart contract further comprises collateral data for secure the compensation service, and wherein the method further comprises using the Reverse Kelly formula to calculate how much fungible tokens must be added to enhance the trust in the compensation.

4. The method of claim 3, wherein the collateral data is received by a plurality of the network nodes of the blockchain network different to the second and third network nodes.

5. The method of claim 3, wherein the collateral data is received by a plurality of the network nodes of the blockchain network including the second and third network nodes.

6. A device comprising:
a processor;
a memory; and
a computer-readable medium coupled to the processor, the computer-readable medium comprising code executable by the processor for implementing a method according to any of the preceding claims.
